Europäisches Patentamt

European Patent Office

Office européen des brevets

(11) Veröffentlichungsnummer: **0 357 913**
**A2**

## EUROPÄISCHE PATENTANMELDUNG

(21) Anmeldenummer: **89113042.9**

(22) Anmeldetag: **15.07.89**

(51) Int. Cl.5: **H02K 5/128 , H02K 5/08 , H02K 5/22 , H02K 3/50**

(30) Priorität: **09.09.88 DE 8811420 U**

(43) Veröffentlichungstag der Anmeldung:
**14.03.90 Patentblatt 90/11**

(84) Benannte Vertragsstaaten:
**DE ES FR GB IT**

(71) Anmelder: **Halm, Richard**
**Silcherstrasse 54 Postfach 69**
**D-7066 Baltmannsweiler(DE)**

(72) Erfinder: **Halm, Richard**
**Silcherstrasse 54 Postfach 69**
**D-7066 Baltmannsweiler(DE)**

(74) Vertreter: **Patentanwälte Phys. Bartels**
**Dipl.-Ing. Fink Dr.-Ing. Held**
**Lange Strasse 51**
**D-7000 Stuttgart 1(DE)**

(54) **Nassläufermotor.**

(57) Bei einem Naßläufermotor, insbesondere zum Anbau an eine Heizungsumwälzpumpe (1), dessen den Läufer (10) tragende Welle (7) in einem Gehäuse (2) gelagert ist, das Mittel (5) zur baulichen Vereinigung mit dem Gehäuse der anzutreibenden Maschine aufweist, und in dem, eingebettet in elektrisch isolierenden Kunststoff, der Ständer (3) mit seiner Wicklung (4) angeordnet ist, ist zumindest die Ständerwicklung (4) durch den Kunststoff gegen eine Berührung mit dem nassen Medium geschützt. Der Kunststoff bildet dabei den den Ständer (3) sowie die Ständerwicklung (4) umgebenden Teil des Gehäuses (2). Der Kunststoff ist ein mit Faserstrukturmineral gefülltes Epoxidharz. Das gesamte Gehäuse (2) einschließlich derjenigen Materialpartien, welche den Ständer (3) und die Ständerwicklung (4), ersteren auch im Bereich seiner Außenmantelfläche, bedecken, ist als ein Schleudergußkörper ausgebildet.

Fig.4

EP 0 357 913 A2

# Naßläufermotor

Die Erfindung betrifft einen Naßläufermotor, insbesondere zum Anbau an eine Heizungsumwälzpumpe, der die Merkmale des Oberbegriffes des Anspruches 1 aufweist.

Bekannte Naßläufermotoren für den Antrieb von Heizungsumwälzpumpen sind verhältnismäßig aufwendig, da der Ständer in einem Gehäuse angeordnet ist, das wenigstens ein Lagerschild aufweist. Außerdem ist ein sogenanntes Spaltrohr unerlässlich, um die Ständerwicklung vor dem Wasser zu schützen, das in die Bohrung des Ständers eindringen kann.

Es ist zwar bereits vorgeschlagen worden (CH-PS 346 111), den Ständer und die Ständerwicklung in Kunststoff einzubetten, der auch die Funktion eines Gehäuses übernimmt. Diese Lösung hat sich aber als unbrauchbar erwiesen, da in dem Kunststoff Risse entstanden sind, und zwar auch dann, wenn man für die Verbindung des Motors mit dem Pumpengehäuse oder für die Verbindung zwischen einem metallischen Lagerschild auf der Abtriebsseite und dem übrigen Teil des Motors Schrauben verwendet hat, welche den Ständer parallel zur Motorwelle durchdringen. Diese Risse führen dazu, daß Feuchtigkeit zu der Ständerwicklung gelangen kann, wobei dieses Eindringen von Feuchtigkeit noch durch die die Schrauben aufnehmenden Bohrungen unterstützt wird.

Der Erfindung liegt die Aufgabe zugrunde, einen Naßläufermotor zu schaffen, bei dem die an solche Motoren zu stellenden Anforderungen kostengünstiger als bisher erfüllt werden können. Diese Aufgabe löst ein Naßläufermotor mit den Merkmalen des Anspruches 1.

Durch das mit Faserstrukturmineral gefüllte Epoxidharz wird zuverlässig das Entstehen selbst von Haarrissen ausgeschlossen. Dadurch, daß ferner das gesamte Gehäuse einschließlich derjenigen Materialpartien, welche den Ständer und die Ständerwicklung,ersteren auch im Bereich seiner Außenmantelfläche, bedecken, als ein Schleudergußkörper ausgebildet ist, lassen sich zum einen Hohlräume innerhalb des Schleudergußkörpers vermeiden. Zum anderen erreicht man mittels eines solchen Schleudergußkörpers die gewünschte Kostenreduzierung.

Ohne Mehraufwand können an den das Gehäuse bildenden Schleudergußkörper Augen für Verbindungsschrauben angeformt sein, mittels deren der Motor mit der anzutreibenden Maschine, also beispielsweise dem Gehäuse einer Heizungsumwälzpumpe, verbunden werden kann. Eine derartige Ausbildung als Anbaumotor ergibt auch den Vorteil, daß der Ständer nicht mit Längsbohrungen für den Durchtritt von Verbindungsschrauben versehen zu sein braucht.

Bei der Ausbildung als Anbaumotor ist vorteilhafterweise der Schleudergußkörper auf der Abtriebsseite mit einem Zentrierflansch versehen, damit der Motor ohne weitere Hilfsmittel an die anzutreibende Maschine angebaut werden kann.

Um problemlos die erforderlichen Verbindungen zwischen Anfang und Ende der Ständerwicklung sowie den Anschlußleitungen herstellen zu können, ist bei einer bevorzugten Ausführungsform ein wenigstens teilweise in den Kunststoff eingebettetes, hohles Einlegeteil gemäß Anspruch 4 vorgesehen, das Anfang und Ende der Ständerwicklung enthält und, falls gewünscht, auch Verbindungsklemmen aufzunehmen vermag. Dieses vorzugsweise aus Kunststoff bestehende Einlegeteil weist vorzugsweise wenistens einen in den Kunststoff eingebetteten, dübelartigen Ansatz auf. Es ist dann nicht störend, daß der Kunststoff nach dem Aushärten praktisch nicht mehr bearbeitet werden kann, weil jede Schraube, wie sie beispielsweise zur Festlegung eines Anschlußkastens am Gehäuse benötigt wird, in einen solchen dübelartigen Ansatz eingedreht werden kann.

Um in einfacher Weise das Einlegeteil in der gewünschten Lage festzuhalten, bis der Kunststoff ausgehärtet ist, kann man das Einlegeteil mit wenistens einem Verbindungsteil versehen, der in eine Ausnehmung des Ständers eingreift. Bei einer bevorzugten Ausführungsform ist das Einlegeteil einstückig mit einer den Wickelkopf übergreifenden und auch auf der dem Ständer abgewandten Seite abdeckenden, ringartigen Kappe ausgebildet. Eine derartige Kappe liegt vorzugsweise gemäß Anspruch 7 am Ständerblechpaket an, wodurch sie sehr leicht zu montieren ist und in der gewünschten Position festgelegt werden kann. Dadurch, daß die Kappe den Wickelkopf nicht nur radial nach außen und radial nach innen, sondern auch auf der dem Ständer wegweisenden Seite abdeckt und vorzugsweise aus einem elektrisch isolierten Material besteht, ist eine gute Isolierung des Wickelkopfes gewährleistet. Man kann außerdem Distanzelemente gemäß Anspruch 8 vorsehen, um in einfacher Weise eine Bedeckung der Kappe mit Kunststoff auch auf der dem Ständer abgewandten Seite sicherzustellen. Weiterhin weist das Einlegeteil vorzugsweise eine Auflagefläche gemäß Anspruch 9 für eine Verschlußplatte auf, die zuverlässig verhindert, daß das Epoxidharz, solange es noch flüssig ist, in das Innere des Einlegeteils eindringen kann. Nach dem Aushärten des Epoxidharzes wird diese Verschlußplatte wieder entfernt.

Ein zusätzlicher Schutz der Ständerwicklung vor dem Zutritt von Wasser, das in die Ständerbohrung eingedrungen ist, ist bei der erfindungsgemäßen Lösung nicht unbedingt erforderlich. Es ist jedoch zweckmäßig, das Eindringen von Wasser zwischen die Bleche des Ständerblechpaketes von dessen Innenmantelfläche her zu unterbinden. Dies kann beispielsweise durch eine Abdeckung der Innenmantelfläche des Ständers mittels einer Kunststofffolie erfolgen, deren Endabschnitte neben den Stirnseiten des Ständers in den hier vorhandenen Kunststoff eingebettet sein können. Das Eindringen von Wasser kann selbstverständlich auch mittels eines Spaltrohres verhindert werden, das vorzugsweise an seinen beiden Enden je einen Flansch gemäß Anspruch 12 aufweist, der eine Flachdichtung an eine Anlagefläche des Gehäuses preßt und dadurch eine zuverläßige Abdichtung bewirkt. Die auf der Abtriebsseite vorgesehene Flachdichtung wird zweckmäßigerweise auch dazu verwendet, die Verbindung zwischen dem Gehäuse des Motors und dem Gehäuse der vom Motor angetriebenen Pumpe abzudichten. Da vorzugsweise der abtriebsseitig liegende Flansch des Spaltrohres radial nach außen und der andere Flansch radial nach innen weist, kann die mit dem letztgenannten Flansch zusammenwirkende Flachdichtung durch den aus der anderen Flachdichtung ausgestanzten Innenteil gebildet sein. Vorteilhafterweise wird der erforderliche Anpreßdruck, mit dem die Flansche des Spaltrohres an den Flachdichtungen anliegen, mittels einer Buchse erzeugt, welche den ra dial nach innen weisenden Flansch des Spaltrohres hintergreift und in axialer Richtung gegen die Anlagefläche des Gehäuses für die zugeordnete Flachdichtung preßt. Das Spaltrohr überträgt diese Anpreßkraft auch auf den radial nach außen weisenden Flansch. Man kann zwar, um die Buchse in axialer Richtung gegen die die Anlagefläche für die Flachdichtung bildende Materialpartie des Gehäuses zu ziehen, die Buchse mit einem Bördelrand versehen, welcher sich an der vom Läufer wegweisenden Seite dieser Materialpartie abstützt. Vorteilhafter ist jedoch zu diesem Zwecke ein Gewindering, der auf einem Außengewinde der Buchse sitzt.

Zumindest die abtriebsseitig angeordnete Flachdichtung liegt vorzugsweise in einer korrespondierenden Vertiefung des Gehäuses, weil hierdurch die Positionierung und Montage der Flachdichtung wesentlich erleichtert wird.

Im folgenden ist die Erfindung anhand von drei in der Zeichnung dargestellten Ausführungsbeispielen im einzelnen erläutert. Es zeigen:

Fig. 1 eine Stirnanschicht des ersten Ausführungsbeispiels,

Fig. 2 eine Draufsicht auf die Abtriebsseite des ersten Ausführungsbeispiels,

Fig. 3 eine Seitenansicht des ersten Ausführungsbeispiels,

Fig. 4 einen Längsschnitt des ersten Ausführungsbeispiels mit angedeutetem Anbau an eine Heizungsumwälzpumpe,

Fig. 5 einen Längsschnitt eines zweiten Ausführungsbeispiels mit angedeutetem Anbau an eine Heizungsumwälzpumpe,

Fig. 6 die Drausicht auf eines der angeformten Augen,

Fig. 7 eine Seitenansicht des angeformten Auges und seiner Verbindung mit dem Gehäuse der Heizungsumwälzpumpe,

Fig. 8 einen Schnitt durch das Auge und den an ihm anliegenden Teil des Gehäuses der Heizungsumwälzpumpe,

Fig. 9 eine teilweise in Längsrichtung geschnitten dargestellte Seitenansicht des dritten Ausführungsbeispiels im zusammengebauten und an eine Umwälzpumpe angebauten Zustand,

Fig. 10 eine teilweise in Längsrichtung geschnitten und auseinandergezogen dargestellte Seitenansicht des dritten Ausführungsbeispiels,

Fig. 11 eine unvollständig und teilweise in Umfangsrichtung geschnitten dargestellte Stirnsicht des dritten Ausführungsbeispiels.

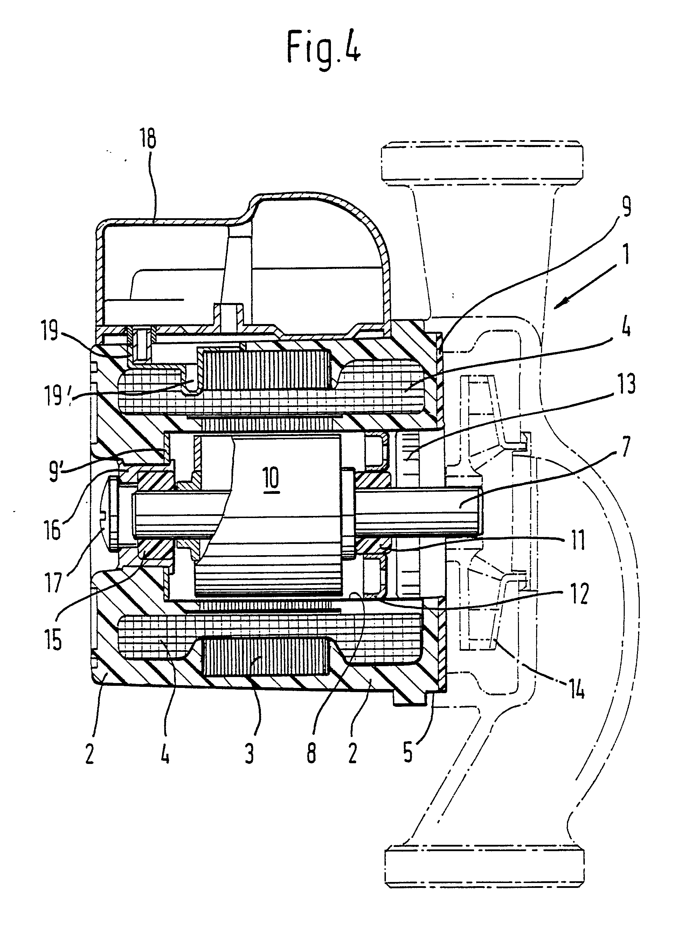

Ein Naßläufer-Anbaumotor für den Antrieb einer Heizungsumwälzpumpe 1 weist ein als Schleudergußkörper ausgebildetes, im wesentlichen zylindrisches Gehäuse 2 auf, das aus mit Faserstrukturmineral gefüttertem Epoxidharz besteht. Wie Fig. 4 zeigt, umgibt das Gehäuse 2 nicht nur den Ständer 3 und die Ständerwicklung 4. In das das Gehäuse 2 bildende, gefüllte Epoxidharz ist die Ständerwicklung 4 vollständig eingebettet, und außerdem bildet der einstückige Schleudergußkörper auch die beiden Lagerschilde. Weiterhin sind an das Gehäuse 2 auf der Abtriebsseite des Motors für den unmittelbaren Anbau an das Gehäuse der Heizungsumwälzpumpe 1 ein Zentrierflansch 5 und zwei diametral liegende, über den Zentrierflansch radial überstehende Augen 6 angeformt. Letztere haben je eine zur Motorwelle 7 parallele Durchgangsbohrung. Für die Verbindung des Motors mit der Heizungsumwälzpumpe 1 brauchen deshalb nur der Zentrierflansch 5 in einen korrespondierenden Sitz des Pumpengehäuses eingeführt und zwei Verbindungsschrauben durch die Augen 6 hindurch in Gewindebohrungen des Pumpengehäuses eingedreht zu werden.

Da bei diesem Ausführungsbeispiel das Epoxidharz die Innenmantelfläche des Ständers 3 nicht bedeckt, liegt an dieser ein Spaltrohr 8 an, das sich bis zu der an der Heizungsumwälzpumpe 1 anliegenden Stirnfläche des Gehäuses 2 erstreckt und dort an einem nach außen abstehenden Dichtungsflansch 9 anschließt, der mit seiner äußeren Randzone zwischen die Dichtungsflächen des Gehäuses 2 und des Gehäuses der Heizungsumwälzpumpe 1 eingreift. Das andere Ende des Spaltrohres 8 erstreckt sich bis zu dem vom Gehäuse 2 gebildeten, auf der der Heizungsumwälzpumpe 1 abgekehrten Seite liegenden Lagerschild. Dort schließt das Spaltrohr 8 an einen radial nach innen ragenden Flansch 9' an, der dicht an der das Lagerschild bildenden Werkstoffpartie des Gehäuses 2 anliegt. Das Spaltrohr 8 und die an seinen beiden Enden vorgesehenen Flansch bilden deshalb zusätzlich zu dem die Ständerwicklung 4 umgebenden Epoxidharz einen Schutz gegen den Zutritt von Feuchtigkeit, weil das Spaltrohr 8 mit den beiden Flanschen verhindert, daß Feuchtigkeit von der Bohrung des Ständers 3 her zwischen dessen Bleche eindringen kann.

Auf der Antriebsseite ist die den Läufer 10 tragende Motorwelle 7 in einem Gleitlager 11 gelagert, das in einen Lagerträger 12 eingesetzt ist, der seinerseits in die mit der Bohrung des Ständers 3 fluchtende Bohrung des Gehäuses 2 eingesetzt ist. Neben dem Gleitlager 11 und dem Lagerträger 12 auf der dem Läufer 10 abgekehrten Seite ist im Gehäuse 2 ein Filterring 13 angeordnet, der verhindert, daß zusammen mit Wasser Parikel in den den Läufer 10 enthaltenden Raum eindringen können.

Die Motorwelle 7 steht über die Anbaustirnfläche des Gehäuses 2 über. Dieser überstehende Endabschnitt trägt im Ausführungsbeispiel das Pumpenrad 14 der Heizungsumwälzpumpe.

Der andere Endabschnitt der Motorwelle 7 ist in einem Gleitlager 15 gelagert, das in einem rückwärtigen Lagerträger 16 angeordnet ist, der seinerseits in das vom Gehäuse 2 gebildete Lagerschild eingesetzt ist. Eine von außen her zugängliche Verschlußschraube 17 gibt, wenn sie abgenommen ist, das im Gleitlager 15 gelagerte Ende der Motorwelle 7 frei. Der Lagerträger 16 hintergreift den Flansch 9' und preßt ihn gegen eine gegen den Läufer 10 weisende innere Stirnfläche des Gehäuses 2. An einer dem Läufer 10 abgewandten Fläche der diese innere Stirnfläche bildenden Materiapartie stützt sich der Bördelrand des Lagerträgers 16 ab.

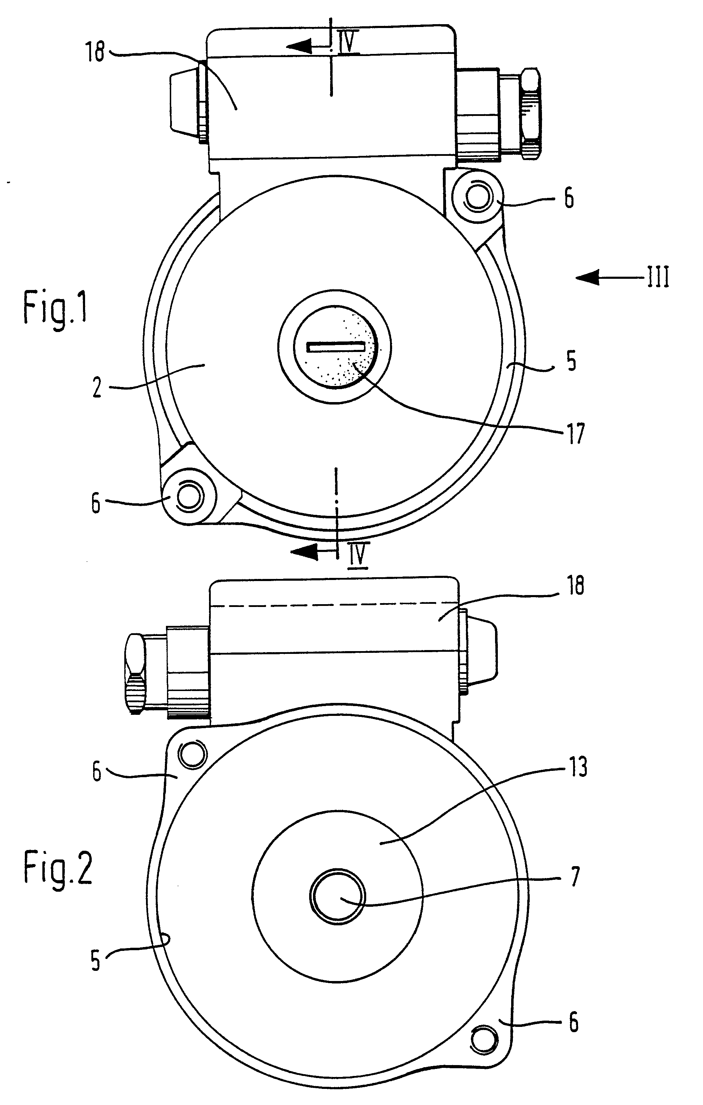

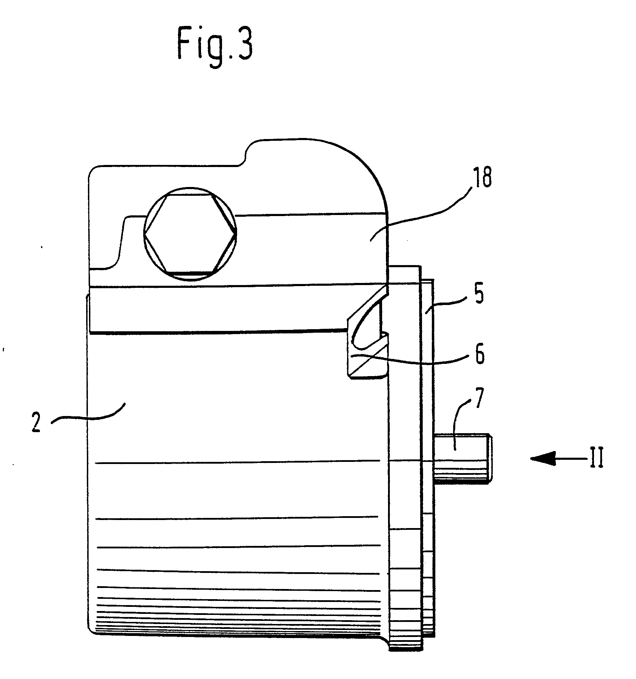

Wie die Fig. 1 bis 4 zeigen, ist auf die leicht konische Außenmantelfläche des Gehäuses 2 ein aus Kunststoff bestehender Anschlußkasten 18 aufgesetzt, dessen Lagerfläche an die Form des Gehäuses 2 angepaßt ist. In dem vom Anschlußkasten 18 bedeckten Bereich des Gehäuses 2 ist in diesen, wie Fig. 4 zeigt, ein hohler Einlegekörper 19 eingesetzt, der aus Kunststoff besteht und zum Schaltkasten 18 hin offen ist. Der Einlegekörper 19 liegt auf der der Heizungsumwälzpumpe 1 abgekehrten Seite auf dem Wickelkopf der Ständerwicklung 4 sowie auf dem Ständer 3 auf. Ein dübelartiger Vorsatz 19' dringt in radialer Richtung gegen die Motorwelle 7 zwischen die einzelnen Stränge des Wickelkopfes ein und ist hier in das Epoxidharz eingebettet. Eine nicht dargestellte Verbindungsschraube, welche den Boden des Anschlußkastens 8 durchdringt, greift in diesen dübelartigen Vorsatz 19' ein, um den Anschlußkasten 18 in einfacher Weise am Gehäuse 2 festzulegen.

Längs des von der Heizungsumwälzpumpe 1 wegweisenden Randes bildet der Einlegekörper 19 eine über die Außenmantelfläche des Gehäuse überstehende und insoweit nicht in das Epoxidharz eingebettete Aufnahme für eine Anschlußleiste, mittels deren die im Einlegekörper 19 liegenden Anfänge und Enden der Ständerwicklung 4 mit den Zuleitungen verbunden werden.

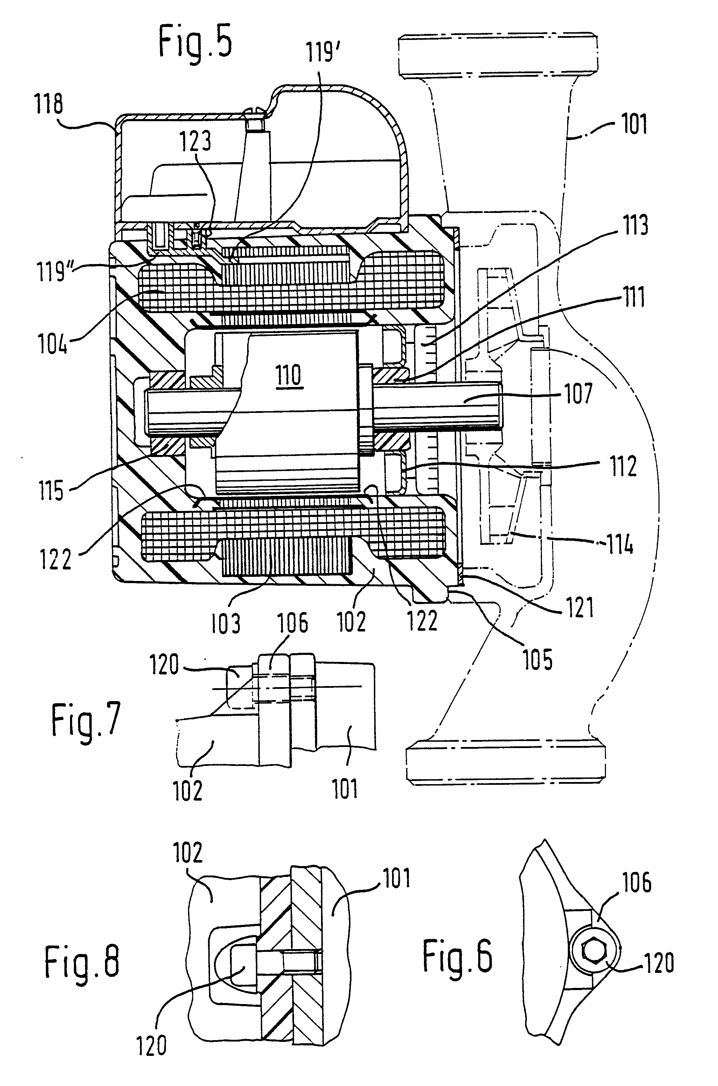

Das in den Fig. 5 bis 8 dargestellte zweite Ausführungsbeispiel stimmt, wie ein Vergleich der Fig. 4 und 5 zeigt, weitgehend mit dem ersten Ausführungsbeispiel überein. Daher sind sich entsprechende Teile mit um 100 größeren Bezugszahlen gekennzeichnet.

Das als einstückiger Schleudergußkörper ausgebildete Gehäuse 102 besteht wie beim ersten Ausführungsbeispiel aus einem mit Faserstrukturmineral gefülltem Epoxidharz. Bis auf die Innenmantelfläche des Ständers 103 ist dieser vollständig in das Epoxidharz eingebettet. Vollständig eingebettet in das Epoxidharz ist ferner die Ständerwicklung 104.

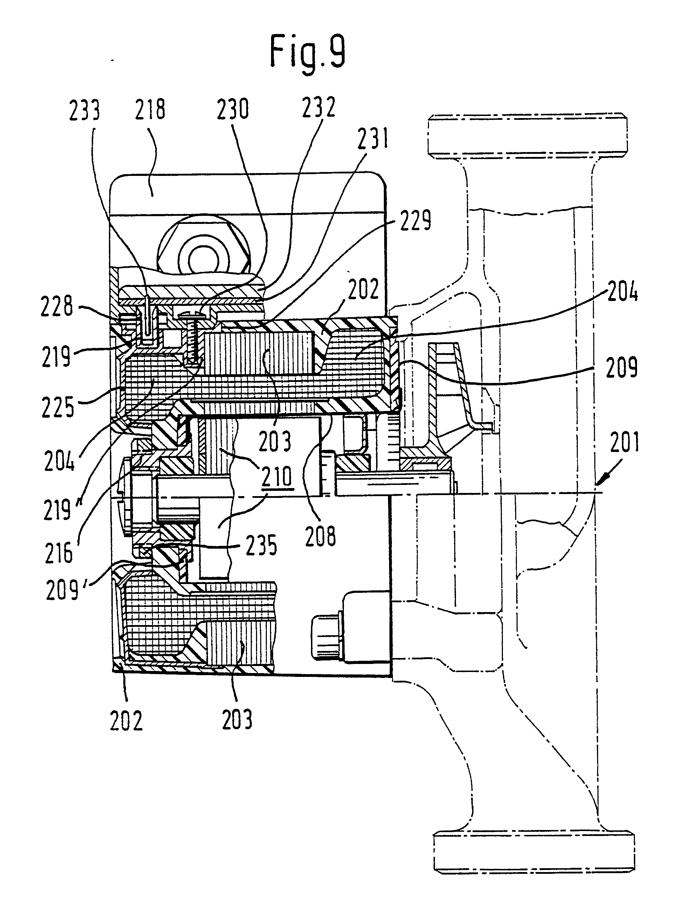

Auf der Anbauseite sind an das Gehäuse 102 ein Zentrierflansch 105 und zwei diametral liegende Augen 106 angeformt. Letztere nehmen, wie die Fig. 6 bis 8 zeigen, je eine Verbindungsschraube 120 auf, welche in je eine Gewindebohrung des Gehäuses der Heizungsumwälzpumpe 1 eingedreht sind, das mit einem Sitz für den Zentrierflansch 5 versehen ist. Ein Dichtungsring 121 dichtet die Verbindung zwischen dem Gehäuse der Heizungsumwälzpumpe 101 und dem Gehäuse 102 nach außen hin ab.

Auf der der Heizungsumwälzpumpe 101 abgekehrten Stirnseite ist das vom Gehäuse 102 gebildete Lagerschild vollständig geschlossen. Daher weist es nur eine nach innen offene zentrale Vertiefung für die Aufnahme eines Gleitlagers 115 auf, in dem der eine Endabschnitt der Motorwelle 107 gelagert ist. Auf der Abtriebsseite ist die den Läufer 110 tragende Motorwelle 107 wie bei dem ersten Ausführungsbeispiel in einem Gleitlager 111 gelagert, das in einen Lagerträger 112 eingesetzt ist. Zwischen diesem Gleitlager 111 und dem Lagerträger 112 einerseits sowie dem Gehäuse der Heizungsumwälzpumpe 101 ist ein Filterring 113 in der mit der Bohrung des Ständers 103 fluchtenden Bohrung des Gehäuses 102 angeordnet.

Da die Ständerwicklung 104 völlig in das Gießharz eingebettet ist, weil der Schleudergußkörper frei von Hohlräumen ist, ist die Ständerwicklung 104 gegen den Zutritt von Wasser geschützt, das in den den Läufer 110 aufnehmenden Raum eintreten kann. Ein Spaltrohr wie bei dem ersten Ausführungsbeispiel ist deshalb nicht erforderlich. Es ist jedoch, um das Eindringen von Wasser zwischen die Bleche des Ständers 103 zu verhindern, an die Innenmantelfläche des Ständers 103 eine dünne Folie 122, beispielsweise eine Myla-Folie, angelegt, die vorzugsweise die Form eines Schlauches hat. Wie Fig. 5 zeigt, sind die beiden Enden dieser schlauchförmigen Folie 122 neben den Stirnseiten des Ständers 103 in das Epoxidharz eingebettet. Die Folie 122 bildet deshalb eine zusätzliche Sicherung gegen den Zutritt von Feuchtigkeit zu der Ständerwicklung 104.

Auf die leicht konische Außenmantelfläche des Gehäuses 102 ist ein Anschlußkasten 118 aufgesetzt, dessen Anlagefläche an die Form der Außenmantelfläche des Gehäuses 2 angepaßt ist.

In dem vom Anschlußkasten 118 abgedeckten Bereich ist in das Gehäuse 102 ein hohler Einlegekörper 119 eingebettet, der mit einem Fortsatz 119' in eine zur Motorwelle 107 parallele Bohrung des Ständers 103 eingreift und dadurch den Einlegekörper 119 solange sicher in der gewünschten Lage festhält, bis das Epoxidharz ausgehärtet ist und den Einlegekörper 119 festhält. Der aus Kunststoff bestehende und zum Anschlußkasten 118 hin offene Einlegekörper 119 bildet eine über die Außenmantelfläche des Gehäuses 102 überstehende Aufnahme 119″ für eine Verbindungsleiste. Diese Verbindungsleiste verbindet die im Einlegekörper 119 liegenden Anfänge und Enden der Ständerwicklung 104 mit den Zuleitungen. Eine im Ausführungsbeispiel ebenfalls über die Außenmantelfläche des Gehäuses 102 überstehende, dübelartige Anformung 123 des Einlegekörpers 119 dient der Aufnahme einer Schraube, mittels deren der Anschlußkasten 118 am Gehäuse 102 festgelegt wird.

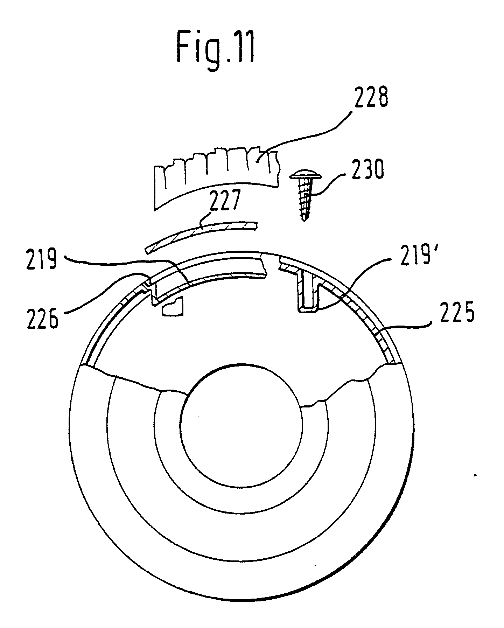

Das in den Fig. 9 bis 11 dargestellte Ausführungsbeispiel stimmt teilweise mit dem ersten Ausführungsbeispiel gemäß den Fig. 1 bis 4 überein. Daher sind sich entsprechende Teil mit um 200 größeren Bezugszahlen gekennzeichnet. Außerdem ist das dritte Ausführungsbeispiel nur soweit erläutert, wie es sich von dem ersten Ausführungsbeispiel unterscheidet. Wegen der übrigen Einzelheiten wird deshalb auf die Ausführungen zum ersten Ausführungsbeispiel Bezug genommen.

Wie die Fig. 9 bis 11 zeigen, ist der aus elektrisch isolierendem Kunststoff bestehende Einlegekörper 219 einstückig mit einer Wickelkopfkappe 225 ausgebildet, welche den einen Wickelkopf 204 nicht nur über seinen gesamten äußeren Umfang abdeckt, sondern auch auf der dem Ständer 203 abgekehrten Stirnseite und auf einem Teil seiner Innenseite. Die an ihrem ständerseitigen Ende doppelt abgekröpfte Außenmantelfläche der Wickelkopfkappe 225 liegt dicht sowohl an der Außenmantelfläche des Ständers 203 als auch an dessen Stirnseite an, wodurch die Wickelkopfkappe 225 sicher positioniert und festgelegt ist. Zusätzlich wird während des Vergießens der Ständerwicklung und des Ständers 203 die Innenfläche der Wickelkopfkappe 225 von einem Dorn gehalten. An der die Stirnfläche der Wickelkopfkappe 225 bildenden Ringzone sind außen überstehende Vorsprünge angeformt, welche sich an der während des Vergießens den Ständer aufnehmenden Form abstützen und dennoch das Bedecken dieser Stirnfläche mit Epoxidharz ermöglichen.Hierdurch behält man eine sehr gute stirnseitige Isolation des Wickelkopfes 204.

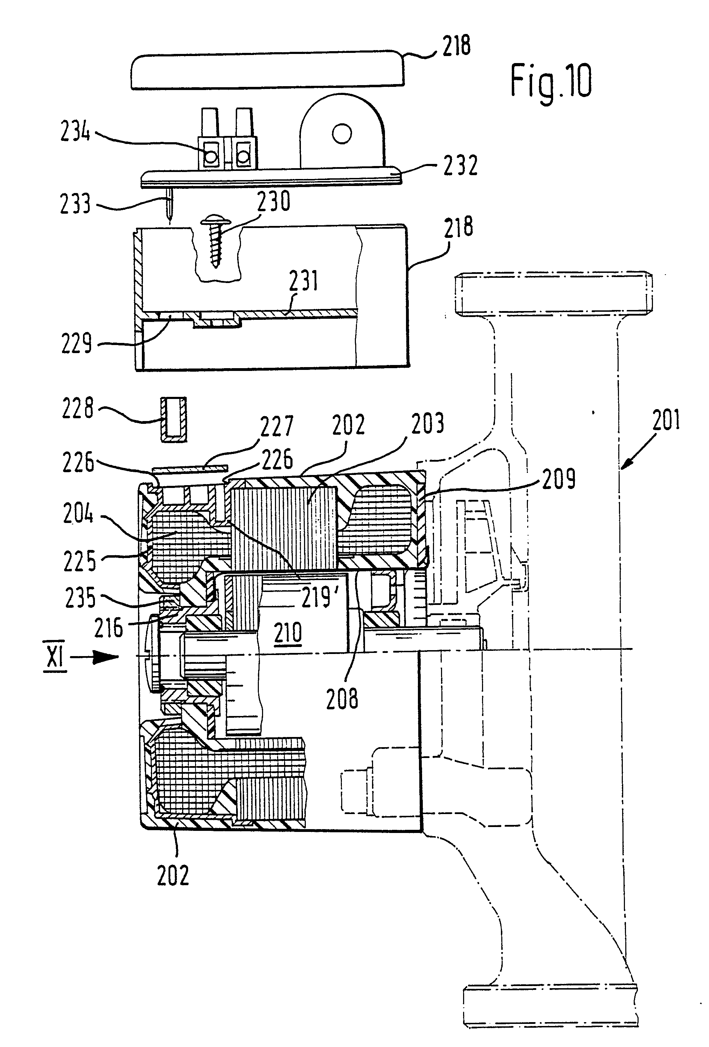

Wie insbesondere Fig. 10 zeigt, weist der Einlegekörper 219 längs seines die Vertiefung begrenzenden Randes eine vertieft liegende Anlagefläche 226 auf, die der Anlage einer Verschlußplatte 227 dient. Diese Verschlußplatte verhindert, daß das noch flüssige Epoxidharz in das Innere des Einlegekörpers 219 eindringen kann. Sie wird nach dem Aushärten des Epoxidharzes entfernt, damit dann beispielsweise eine Reihe von nebeneinander angeordneten Verbindungsklemmen 228 in die eine Kammer des Einlegekörpers 219 eingesetzt werden können. Jede dieser Verbindungklemmen 228 enthält eine Kontaktbuchse, die beim Einsetzen in den Klemmenkörper 228' den zuvor in diesen eingelegten Draht der Ständerwicklung kontaktiert.

Die Verbindungsklemmen 228 durchgreifen, wie Fig. 9 zeigt, einen Durchbruch 229 im Zwischenboden des Anschlußkastens 218, der mittels Schrauben 230 mit dem Einlegekörper 219 verbunden wird. Die Schrauben 230 dringen in je eine der dübelartigen Fortsätze 219' des Einlegekörpers 219 ein. Der Anschlußkasten 218 wird auf der Außenmantelfläche des Gehäuses 202 sowohl durch die Verbindungsklemmen 228 und den Durchbruch 229 als auch die Schrauben 230 und den an der vertieften Anlagefläche 226 anliegenden Teilen des Zwischenbodens 231 positioniert.

Eine auf dem Zwischenboden 231 des Anschlußkastens 218 aufliegende Trägerplatte 232 trägt sowohl isoliert voneinander Kontaktstifte 233, von denen jeder in einer der Verbindungsklemmen 228 eindringt, wenn der Anschlußkasten aufgesetzt wird, also auch Anschlußklemmen 234, von denen jede mit einem der Kontaktstifte 233 elektrisch leitend verbunden ist.

Das Spaltrohr 208, das an der Innenmantelfläche des Ständers 203 anliegt, ist an seinem auf der Abtriebsseite des Motors liegenden Ende mit einem radial nach außen überstehenden Flansch und an seinem anderen Ende mit einem radial nach innen überstehenden Flansch versehen. Der erstgenannte Flansch übergreift die innere Randzone eines an der der Umwälzpumpe 201 zugewandten Stirnfläche des Gehäuses 202 anliegenden Flachdichtungsringes 209 und preßt den Flachdichtungsring 209 gegen diese Stirnfläche des Gehäuses 202. Um den Flachdichtungsring 209 in einfacher Weise am Gehäuse 202 positionieren zu können, ist diese Stirnseite mit einer den Flachdichtungsring 209 aufnehmenden Vertiefung versehen. An der äußeren Randzone des Flachdichtungsringes 209 liegt das Gehäuse der Umwälzpumpe 201 an, wodurch die hier vorgesehene Verbindung zwischen dem Gehäuse 202 und der Umwälzpumpe 201 ebenfalls abgedichtet ist.

Der radial nach innen weisende Flansch des Spaltrohres liegt an der dem Läufer 210 zugewandten Stirnfläche eines zweiten Flachdichtungsringes 209' an, der aus dem aus dem Flachdichtungsring 209 ausgestanzten Material besteht. Andererseits liegt dieser zweite Flachdichtungsring 209' an der dem Läufer 210 zugewandten Stirnfläche einer sich vom Wickelkopf aus radial nach innen erstreckenden Materialpartie des Epoxidharzes an. Den nach innen weisenden Flansch des Spaltrohre 208 und den zweiten Flachdichtungsring 209' übergreift der Flansch des Lagerträgers 216, der in der von der Materialpartie gebildeten Bohrung zentriert ist und über die dem Läufer 210 abgekehrte Stirnfläche dieser Materialpartie übersteht. Im Bereich dieses Überstandes ist der buchsenförmige Lagerträger 216 mit einem Außengewinde versehen, das einen Gewindering 235 trägt. Mittels dieses Gewinderinges wird der Flansch des Lagerträgers 216 gegen die Materialpartie gezogen, wodurch der Flansch des Spaltrohres 208 und der Flachdichtungsring 209' ebenfalls gegen diese Materialpartie gepreßt werden. Diese Anpreßkraft wird vom Spaltrohr 208 auf den radial nach außen weisenden Flansch und den Flachdichtungsring 209 übertragen. Nach dem Festziehen des Gewindes 235 wird dieser auf dem Lagerträger 216 mittels Lack oder in einer anderen Weise gesichert.

Alle in der vorstehenden Beschreibung erwähnten sowie auch die nur allein aus der Zeichnung entnehmbaren Merkmale sind als weitere Ausgestaltungen Bestandteile der Erfindung, auch wenn sei nicht besonders hervorgehoben und insbesondere nicht in den Ansprüchen erwähnt sind.

## Ansprüche

1. Naßläufermotor, insbesondere zum Anbau an eine Heizungsumwälzpumpe, dessen den Läufer tragende Welle in einem Gehäuse gelagert ist, das Mittel zur baulichen Vereinigung mit dem Gehäuse der anzutreibenden Maschinen aufweist, und in dem, eingebettet in elektrisch isolierenden Kunststoff, der Ständer mit seiner Wicklung angeordnet ist, wobei zumindest die Ständerwicklung durch den Kunststoff gegen eine Berührung mit dem nassen Medium geschützt ist und der Kunststoff den den Ständer sowie die Ständerwicklung umgebenden Teil des Gehäuses bildet, dadurch gekennzeichnet, daß

a) der Kunststoff ein mit Faserstrukturmineral gefülltes Epoxidharz ist und

b) das gesamte Gehäuse (2; 102; 202) einschließlich derjenigen Materialpartien, welche den Ständer (3; 103; 203) und die Ständerwicklung (4; 104; 204), ersteren auch im Bereich seiner Außenmantelfläche, bedecken, als ein Schleudergußkörper ausgebildet ist.

2. Motor nach Anspruch 1, dadurch gekennzeichnet, daß die Mittel zur baulichen Vereinigung durch einstückig mit dem Gehäuse (2; 102; 202) ausgebildete Augen (6; 106; 206) gebildet sind.

3. Motor nach Anspruch 2, dadurch gekennzeichnet, daß die Augen (6; 106; 206) an der einen Zentrierflansch (5; 105; 205) bildenden Stirnseite des Gehäuses (2; 102; 202) angeordnet sind.

4. Motor nach einem der Ansprüche 1 bis 3, gekennzeichnet durch ein wenigstens teilweise in den Kunststoff eingebettetes, hohles Einlegeteil (19; 119; 219), das von der Gehäuseaußenseite her zugänglich ist und Anfang sowie Ende der Ständerwicklung (4; 104; 204) enthält.

5. Motor nach Anspruch 4, dadurch gekennzeichnet, daß die zugängliche Öffnung des Einlegeteils (19; 119; 219) in einem von einem Anschlußkasten (18; 118; 218) abgedeckten Teil der Außenfläche des Gehäuses (2; 102; 202) liegt und wenigstens einen zumindest teilweise in den Kunststoff eingebetteten, dübelartigen Teil (19'; 119'; 219') aufweist.

6. Motor nach Anspruch 4 oder 5, dadurch gekennzeichnet, daß das Einlegeteil (219) einstückig mit einer den Wickelkopf (204) übergreifenden und auf der dem Ständer (203) abgewandten Seite abdeckenden, ringartigen Kappe (225) ausgebidet ist.

7. Motor nach Anspruch 6, dadurch gekennzeichnet, daß die Kappe (225) an der Außenmantelfläche und vorzugsweise zusätzlich an der Stirnfläche des Ständerblechpaketes anliegt.

8. Motor nach Anspruch 6 oder 7, dadurch gekennzeichnet, daß die Kappe (225) an der Außenseite der dem Ständer (203) abgewandten Ringzone vorspringende Distanzelemente aufweist.

9. Motor nach einem der Ansprüche 4 bis 8, dadurch gekennzeichnet, daß das Einlegeteil (219) längs seines die Vertiefung begrenzenden Randes eine vertieft liegende Auflagefläche (226) für eine Verschlußplatte (227) aufweist.

10. Motor nach einem der Ansprüche 1 bis 9, dadurch gekennzeichnet, daß die Innenmantelfläche des Ständers (103) gegen den Läufer (110) hin durch eine an ihr anliegende Kunststoffolie (122) abgedeckt ist, deren Endabschnitte neben den Stirnseiten des Ständers (103) in den hier vorhandenen Kunststoff eingebettet sind.

11. Motor nach einem der Ansprüche 1 bis 10, dadurch gekennzeichnet, daß zwischen dem Ständer (3; 203) und dem Läufer (10; 210) ein Spaltrohr (8; 208) vorgesehen ist, das an dem auf der Abtriebsseite des Motors liegenden Ende an einen nach außen ragenden und an seinem anderen Ende einen nach innen ragenden Flansch anschließt.

12. Motor nach Anspruch 11, dadurch gekennzeichnet, daß

a) der auf der Abtriebsseite liegende Flansch des Spaltrohres (208) die Randzone einer an der Stirnseite des Ständers (203) anliegenden Flachdichtung (209) übergreift und gegen diese Stirnseite drückt,

b) der andere Flansch des Spaltrohres (208) auf der dem Läufer (210) zugewandten Seite einer Flachdichtung (209′) anliegt und diese gegen die Stirnfläche einer die Welle (210) im Abstand konzentrisch umgebenden Materialpartie des Gehäuses (202) drückt.

13. Motor nach Anspruch 12, dadurch gekennzeichnet, daß in der von der Materialpartie gebildeten Öffnung eine Gewindebuchse (216) angeordnet ist, die mit einem Flansch die dem Läufer zugewandte Seite der Materialpartie und der Flachdichtung (209′) teilweise übergreift und einen Gewindering (235) trägt, der auf der dem Läufer (210) abgewandten Seite der Materialpartie sich an dieser in axialer Richtung abstützt.

14. Motor nach Anspruch 13, dadruch gekennzeichnet, daß zumindest auf der Abtriebsseite die Flachdichtung (209) in einer entsprechenden Vertiefung des Gehäuses (202) liegt.

18

IV

6

III

Fig.1

2

5

17

6

6

IV

18

6

13

Fig.2

7

5

6

# Fig.3

Gm 5929/33

# Fig.4

Fig.5

Fig.6

Fig.7

Fig.8

Gm 5929/33

# Fig.9

Fig.10

Gm 5929/33

# Fig.11

228

230

227

219

226

219'

225